Europäisches Patentamt

European Patent Office

Office européen des brevets

(11) Publication number: **0 219 989**

**A2**

(12) # EUROPEAN PATENT APPLICATION

(21) Application number: 86307421.7

(51) Int. Cl.⁴: **H04N 1/46** , H04N 1/40

(22) Date of filing: 26.09.86

(30) Priority: 01.10.85 JP 218233/85

(43) Date of publication of application:
29.04.87 Bulletin 87/18

(84) Designated Contracting States:
DE FR GB

(71) Applicant: SEIKO INSTRUMENTS &
ELECTRONICS LTD.
31-1, Kameido 6-chome
Koto-ku Tokyo 136(JP)

(72) Inventor: Yamagushi, Kaneo Seiko
Instruments & Electronics
31-1, Kameido 6-chome
Koto-ku Tokyo(JP)
Inventor: Tanaka, Fumihiro Seiko Instruments
& Electronics
31-1, Kameido 6-chome
Koto-ku Tokyo(JP)
Inventor: Shimada, Yoshio Seiko Instruments
& Electronics
31-1, Kameido 6-chome
Koto-ku Tokyo(JP)
Inventor: Matsushima, Kenichi Seiko
Instruments & Elect.
31-1, Kameido 6-chome
Koto-ku Tokyo(JP)
Inventor: Watanabe, Shinya Seiko
Instruments & Elect.
31-1, Kameido 6-chome
Koto-ku Tokyo(JP)

(74) Representative: Miller, Joseph et al
J. MILLER & CO. Lincoln House 296-302 High
Holborn
London WC1V 7JH(GB)

(54) Color hard copy system.

(57) A colour hard copy system for producing a colour hard picture from colour video signals is characterised by the provision in combination of a front end circuit (4) to which the video signals are fed and in which they are converted into digital signals and sampled by a plurality of threshold values from a threshold voltage generating circuit (10); a picture memory (8) in which picture information output digital signals produced by said end circuit (4) are written in by prescribed write in addresses from a write-in address control circuit (19) said write-in addresses being based on a selected method of representation of a multi-colour gradation picture; a read-out control circuit (33) for reading out picture data from the memory (8) based on said selected method of representation; and a coloured picture printer (28) for printing signals derived from the read out signals from the memory (8).

F I G. 1

PICTURE MEMORY

FRONT END

RIN
GIN
BIN

ROUT
GOUT
BOUT

Y
M
C

PRINTING UNIT

CONTROLLER

# COLOR HARD COPY SYSTEM

This invention relates to colour hard copy systems, that is to say to systems for printing coloured pictures on a paper or other suitable surface from data conveyed by colour video signals. In colour hard copy systems picture data signals representative of a coloured picture or display and which are available, for example, at a colour graphic terminal device are employed to print hard copy coloured pictures on paper or the like. The picture data signals which may be of any nature known in colour TV or colour video systems e.g. separate or composite RGB (red, green, blue) video signals employed in a colour graphic system are fed in to the colour hard copy system which uses them to print hard copies of the picture which would closely resemble that produced if they were used to give a display from a colour cathode ray tube reproducer in the ordinary way.

As will be seen later, in carrying out the present invention, separate or composite video signals which could be used to operate a colour graphic display device are fed in to the colour hard copy system and a multicolour gradation hard copy picture is derived therefrom by converting the input video signals into digital signals by means of a comparator supplied with threshold voltages which are varied statically to several values; writing said digital signals into a picture memory in accordance with a selected method of picture representation of the multi-colour gradation picture, such as a density pattern method or an organised dither method by write-in addresses corresponding to the threshold voltage values present at the time; effecting read out from the memory by read-out addresses corresponding to the method of representation adopted; and utilising the signals read out to operate a printer.

Methods of picture representation such as the density pattern method and the organised dither method are well known as methods for obtaining a multi-colour gradation picture by printing on the output paper of a colour hard copy system. In the density pattern method one dot is represented by a matrix, e.g. a 2 X 2 matrix or a 4 X 4 matrix. In the organised dither method a multi-colour gradation picture is represented by the application of a sort of random mask usually called a dither matrix.

Laid open Japanese Patents Nos. 52969/1984 and 67059/1984 and other publications disclose arrangements in which, in order to improve picture quality, an input signal is converted into a digital signal of several bits by an A/D (analog-digital) converter, and a matrix stored in a ROM (read only memory) is selected on the basis of the information in this digital signal so as to generate a printing pattern. These known arrangements, however, present serious practical limitations and disadvantages. It is very difficult for such a combination of A/D converter and a ROM as is involved in such known systems to deal effectively with very high frequencies such as the video signal frequencies of 100 MHz or more which are present in recently developed colour graphic display arrangements with high speed operation. This difficulty arises because, in a sequential comparison type A/D converter, a threshold voltage is varied dynamically and, with such a converter, a satisfactory response does not generally occur, at best, at frequencies above a few MHz. There are some parallel operation type A/D converters which have a band width extending to 100 MHz or even more but, in practice, however, when they are used to handle actual pulsed waves, they will not respond satisfactorily at frequencies above a few tens of MHz at best.

Moreover, the relationship between a peak voltage and a colour is generally regulated by regulation effected on the CRT (cathode ray tube) side with regard to video signals, and in conventional methods of subjecting a voltage to A/D conversion, the ROM table is referred to simply in accordance with digital signals of several bits. Such methods, and the apparatus involved in carrying them out, do not meet present day requirements as regards fidelity, speed of operation and reliability. Moreover the methods involve the use of complicated circuits and bulky memories are needed if regulation is effected on the ROM table.

According to this invention a colour hard copy system for producing a colour hard picture from colour video signals is characterised by the provision in combination of a front end circuit to which the video signals are fed and in which they are converted into digital signals and sampled by a plurality of threshold values from a threshold voltage generating circuit; a picture memory in which picture information output digital signals produced by said front end circuit are written in by prescribed write in addresses from a write-in address control circuit, said write-in addresses being based on a selected method of representation of a multi-colour gradation picture; a read-out control circuit for reading out picture data from the memory based on said selected method of representation; and a coloured picture printer for printing signals derived from the read out signals from the memory.

The invention is illustrated in and further explained in connection with the accompanying drawings in which:-

Fig. 1 is a block diagram of a preferred embodiment of the invention;

Fig. 2 is an explanatory diagram illustrative of the basic principle of operation of the invention;

Fig. 3 exemplifies in diagrammatic manner a picture on a CRT display;

Fig. 4 illustrates by way of example the writing of data into a picture memory in accordance with a density pattern method;

Fig. 5 illustrates by way of example the content of a picture memory into which data has been written in accordance with a density pattern method;

Fig. 6 shows by way of example part of a picture printed in accordance with a density pattern method, printed dots in the pattern being represented by filled in circles and non-printed dots being represented by open circles;

Fig. 7 illustrates an example of writing in a picture memory in accordance with an organised dither method;

Fig. 8 shows an example of the content of a picture memory written therein in accordance with an organised dither method;

Fig. 9 shows an example of a 2 X 2 dither matrix;

Fig. 10 illustrates the relationship between a printed picture and memory banks in accordance with a density pattern method; and

Fig. 11 illustrates an example of sampling in accordance with an organised dither method;

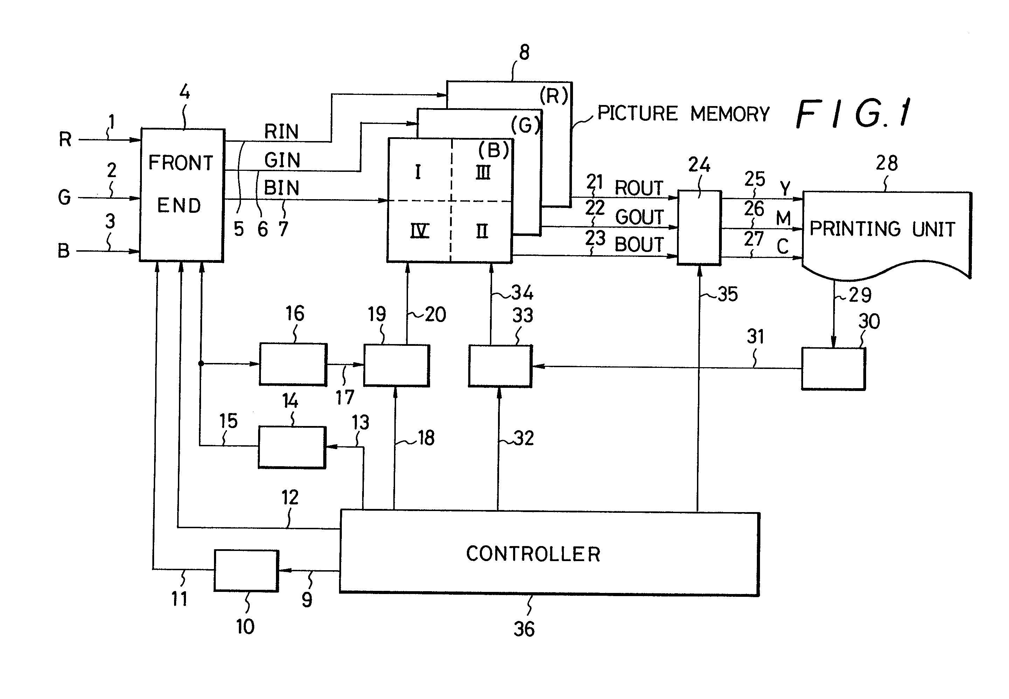

Referring first to Fig. 1, red, green and blue input video signals R, G and B are fed in on leads 1, 2 and 3 respectively to a sampling front end circuit 4 which samples them with respect to a threshold voltage. The data signals RIN, GIN and BIN thus obtained are fed over leads 5, 6 and 7 respectively to a picture memory 8 where they are stored. As will be explained more fully later herein, write-in addresses employed for this operation are modified by write-in control signals from a controller 36 in accordance with the adopted method of representation of a multi-colour gradation picture. At the time of printing, signals ROUT, GOUT and BOUT are read out of the picture memory and fed over leads 21, 22, 23 to a RGB/YMC conversion circuit 24 which supplies signals YMC (yellow, magenta and cyan signals) over leads 25, 26, 27 respectively to a printing unit 28. In the operation of reading out the signals ROUT, GOUT and BOUT the read out addresses are modified by read-out address control signals from the controller 36 in accordance with the method of representation of the multi-colour gradation picture employed.

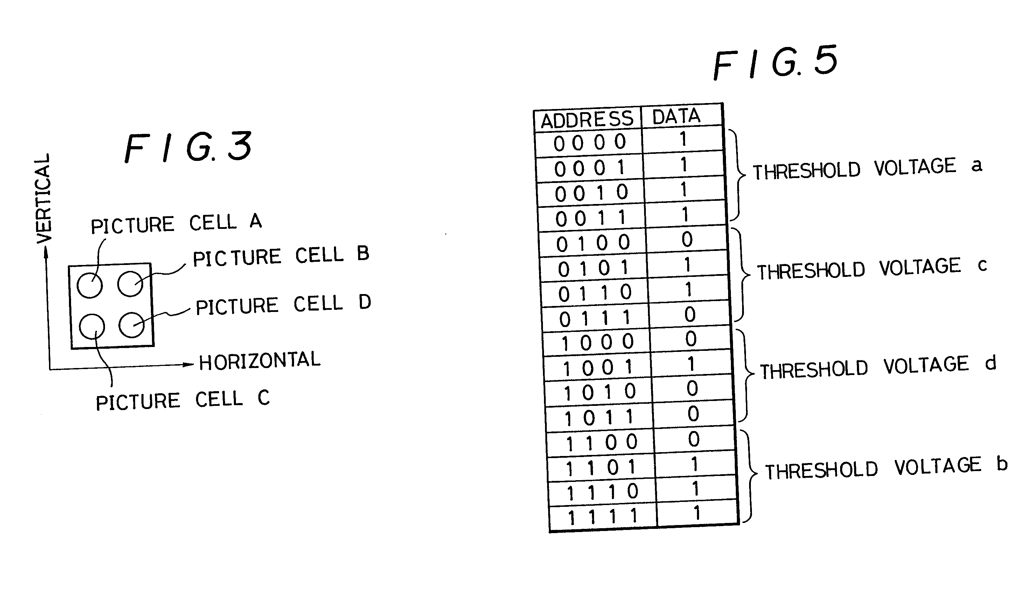

In operation, if a picture with multi-colour gradation in accordance with the density pattern method is to be obtained, the writing in of signals to the picture memory banks is effected with a threshold voltage which is varied in accordance with the number of density patterns. In the case of a 2 X 2 matrix, four threshold voltages would be used, and writing in would be made in four banks as represented at I, II, III and IV in Fig. 1, said voltages being in ascending sequence of values. In the case of a 4 X 4 matrix, sixteen threshold voltages would be used for writing into sixteen banks. Printing can be effected by reading data out of these banks, one by one, to form one picture "box". Fig. 3 shows a picture box for the case of a 2 X 2 matrix. As will be seen it has four picture cells which are referenced A, B, C and D in the figure.

If, however, a picture with multi-colour gradation in accordance with an organised dither method is to be obtained, the threshold voltage itself is used as the mask of a dither matrix. In the case of a 2 X 2 dither matrix, the threshold voltage is fixed at one value and subject video signals are scanned in such a manner that every alternate signal is skipped both in the lateral and in the longitudinal directions. By performing this operation four times with the threshold voltage varied, patterns masked with the dither matrix are obtained in the picture memory. In the case of a 4 X 4 dither matrix, this operation would be conducted sixteen times. Printing can be effected by simply reading out the patterns thus formed.

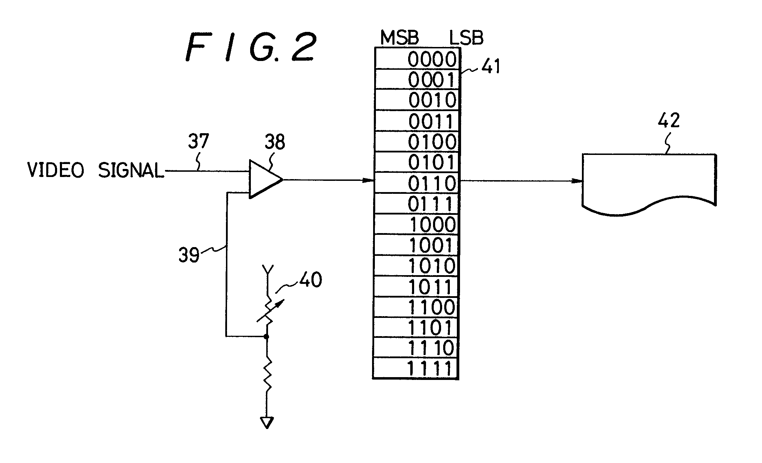

Fig. 2 is a diagram illustrating the basic principle of operation of the invention. In Fig. 2, 38 is a comparator into which an input video signal is fed over a lead 37. In the case illustrated by Fig. 3, the video signal 37 repeats four picture boxes - (composed of four picture cells A, B, C and D) cyclically as shown in the said Fig. 3. The comparator 38 compares a threshold voltage fed over lead 39 from a potentiometer 40 with the video signal 37 and writes a digital signal of "1" or "0" in a 16-bit picture memory 41. The 16 digital combinations in the figure are addresses. In printing, a printing unit 42 reads data out of the picture memory 41. Although the threshold voltage 39 is represented in Fig. 2 purely diagrammatically as produced from a potentiometer 40 including a variable resistor, any device capable of producing an appropriate voltage under external control could be used. It should be noted that it is quite unnecessary to make the threshold voltage variable at a high speed. This is of great practical advantage.

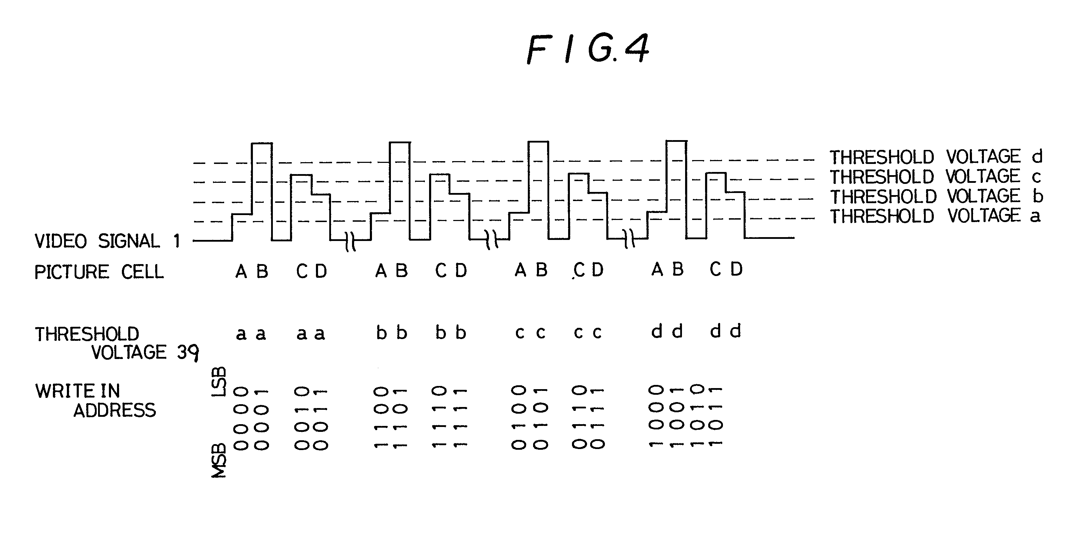

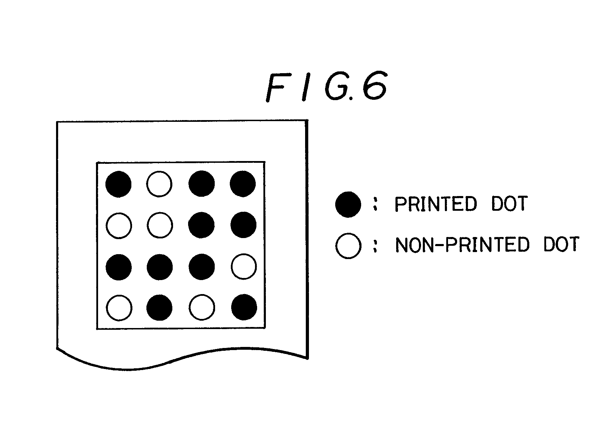

To obtain representation by the density pattern method using a 2 X 2 matrix, the threshold voltage 39 and a write-in address generated by an address control circuit (not shown) would be varied as shown in Fig. 4. In this case there are four threshold voltage values $a$, $b$, $c$ and $d$ as shown, and when writing is effected into the picture memory 41 by sampling as shown in Fig. 4, the memorised result is as conventionally shown in Fig. 5. As will be seen,the writing in the memory is performed with the threshold voltage varied for each bank (an upper-rank address is of 2 bits). The data thus written-in is read out for printing in the following way by a read-out address generating circuit (not shown):

0000, 0100, 0001, 0101, line feed, 1000, 1100, 1001, 1101, line feed, 0010, 0110, 0011, 0111, line feed, 1010, 1110, 1011, 1111, line feed.

A pattern as shown in Fig. 6 is obtainable by printing in such a manner as is described above. With this method of reading, a value for each threshold voltage stored in each bank is read therefrom in accordance with the layout of the picture boxes in Fig. 3. In this way picture representation by the density pattern method is obtained.

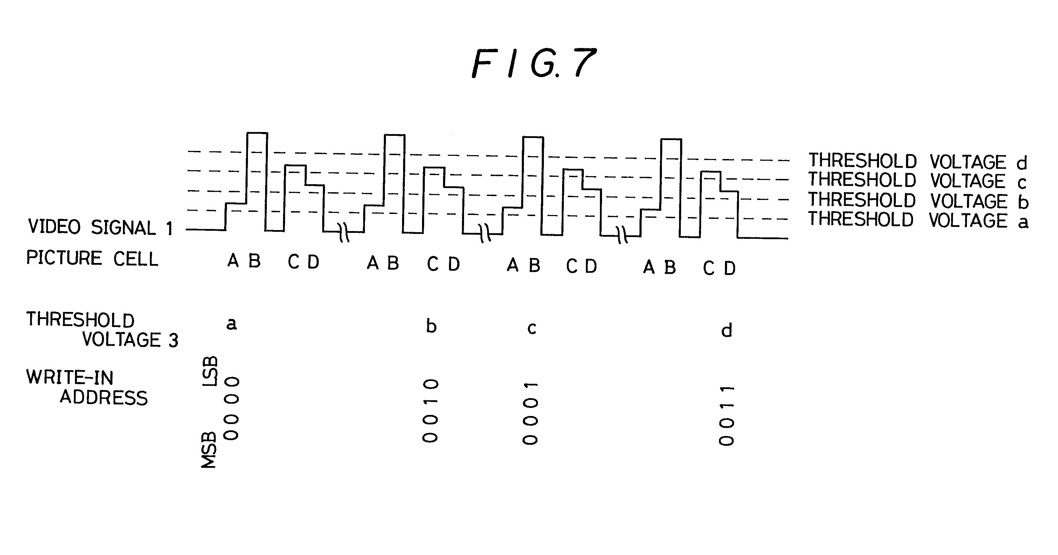

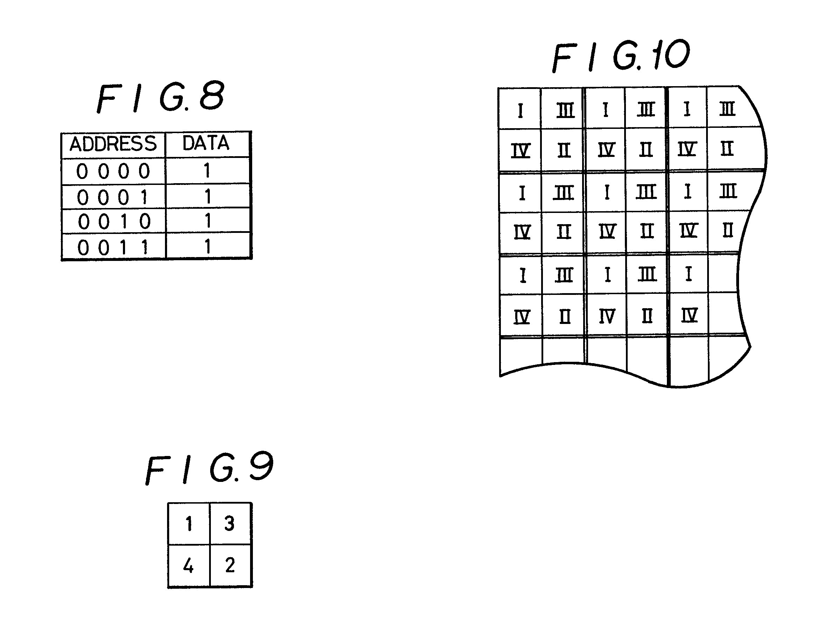

In the case in which representation by the organised dither method is to be obtained, the threshold voltage 39 and an address generated by a write-in address generating circuit (not shown) are varied as shown in Fig. 7. Here, the threshold voltage 39 comprises four values $a$, $b$, $c$ and $d$ similarly to Fig. 4 and when writing is effected in the picture memory 41 by sampling as shown in Fig. 7, the result in the picture memory is as represented conventionally in Fig. 8. As will be seen, writing-in is effected with each of the picture boxes A to D made to correspond to 1 bit of each memory and with the threshold voltage varied for each of them. The data thus written in is read out for printing in the following way by a read-out address generating circuit (not shown):

0000, 0001, line feed, 0010, 0011, line feed.

The result thus obtained is an all-out printing. This is because the organised dither method is intrinsically effective only for a considerably large area. This method of reading is simple inasmuch as it requires only the reading of addresses in a low-to-high sequence. Fig. 9 represents a dither matrix employed in this operation.

The embodiment shown in Fig. 1 will now be described more fully in the light of the operating actions just set out.

As already stated the input signals are of the three primary colours R, G and B (red, green and blue). These primary colour signals can be obtained from composite video signals of the type specified in RS170 of EIA (which is an industrial standard established by the Electronic Industry Association of the USA) by simply removing a synchronising signal therefrom or if the available signals are modulated signals of the NTSC type, the primary colour signals can be obtained therefrom by demodulation.

The primary colour R, G and B signals on lines 1, 2 and 3 are converted into 1-bit digital signals RIN 5, GIN 6 and BIN 7 by the front end circuit 4 and fed over the lines 5, 6, 7 to the picture memory 8. A threshold voltage for comparing with the primary colour input signals supplied to the front end circuit 4 is supplied over line 11 from a threshold voltage generating circuit 10 which is controlled by a threshold control signal which appears on line 9 and is produced by the controller 36. Differences in peak voltage generally occur among primary colour signals and in most usual colour graphic display devices, white balance regulation is effected on the CRT side. In the present arrangement, however, the threshold voltage 11 is regulated accurately for each of the three primary colour signals and accordingly the threshold control signal 10 produces substantially the same effect as is obtained by white balance regulation in a known colour graphic display device. It suffices, for instance, for each of the threshold voltages $a$, $b$, $c$ and $d$ to be multiplied by the respective R, G and B peak voltage while the ratios among these threshold voltages are maintained. The controller 36 supplies over the lead 12 an RGB select signal for selecting the red, green or blue input signal. A sampling clock generator 14 supplies over lead 15 a sampling clock signal for effecting sampling in the front end circuit 4. The said sampling clock generating circuit 14 generates an appropriate clock signal for sampling the R, G and B signals with a synchronising signal, such as a horizontal - (line) synchronising signal (not shown) for video signals. The sampling clock generating circuit 14 is controlled by the controller 36 by a sampling clock control signal fed over line 13. Any known means, for example a phase locked loop circuit, may be used for sampling the R, G and B signals.

16 is a write-in address generating circuit constituted by a counter which counts the sampling clock signals on line 15. A write-in address control circuit 19 derives from an intermediate write-in address on line 17 from the write-in address generating circuit 16 and a write-in address control signal on line 18 from the controller 36, a write-in address which is fed over line 20 to the picture memory 8.

When printing is effected, a printing unit 28 produces on line 29 a data take-in clock signal and a read-out address generating circuit 30 counts the clock signals on line 29 and generates an intermediate read-out address which appears on line 31 and is fed to a read out address control circuit 33 which also receives, on line 32, a read-out address control signal from the controller 36. The circuit 33 derives from the read-out address signal on line 31 and the read-out address control signal on line 32, a read-out address signal which is passed over line 34 to the memory 8 and reads out the picture data outputs ROUT, GOUT and BOUT which appear on lines 21, 22 and 23 respectively. Because printing is generally conducted with the three primary colours Y, M and C (yellow, magenta and cyan), an RGB/YMC conversion circuit 24 is used to produce from the red, green and blue output signals ROUT, GOUT and BOUT yellow, magenta and cyan signals Y, M and C respectively which are fed over lines 25, 26 and 27 respectively to the printing unit 28. An RGB/YMC control signal is fed from the controller 36 to the circuit 24 over line 35. R, G and B are in a simple complementary colour relationship with Y, M and C and therefore Y, M and C are obtainable by inverting R, G and B.

In operation, if a multicolour gradation picture in accordance with the density pattern method is to be obtained, the input video signals R, G and B are sampled at the lowest level of threshold voltage and written in to a bank of the picture memory 8. Assuming representation is to be made by a 2 X 2 matrix, these samples are written into the bank referenced I of the picture memory 8. Signals sampled at respectively higher levels of threshold voltage are written into the memory banks referenced II, III and IV. In printing, reading is made by 1-bit out of each of the banks I, II, III and IV as shown in Fig. 10, so as to form picture boxes each of 4 bits. In this way, a multicolour gradation picture in accordance with the density pattern method is obtained.

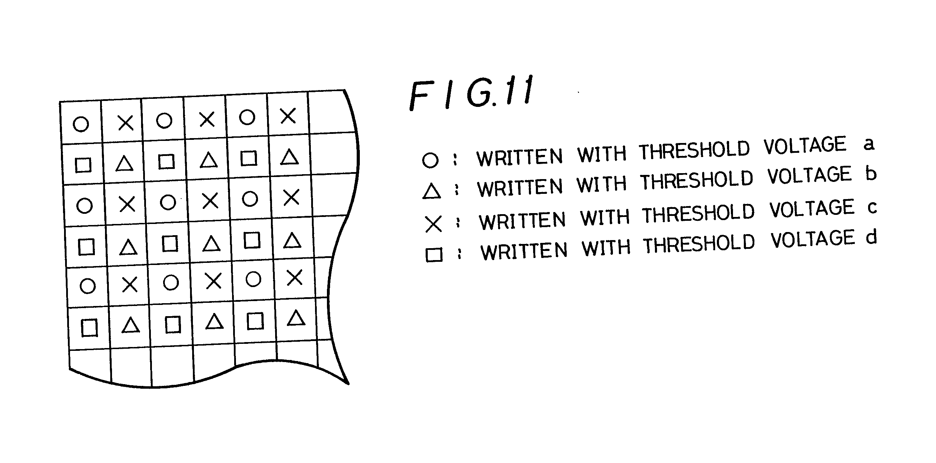

If a multicolour gradation picture in accordance with the organised dither method is to be obtained, variations of the threshold voltage on line 11 in relation to said threshold voltage are themselves used as a dither matrix for writing in. To put the matter in another way, assuming a 2 X 2 matrix to be employed, sampling is made once only by a threshold voltage for a 2 X 2 picture box of video signals from a subject (as shown and described hereinbefore in connection with Fig. 7). In the circuit of Fig. 1, the write-in address control circuit 19 supplies over line 20 the write in address for the picture memory 8 in accordance with the threshold voltage on line 11 at the time so that, in effect, the said address is in the form of a dither matrix. Fig. 11 shows schematically a way of writing addresses in a skipping manner in relation to threshold voltages $\underline{a}$ to $\underline{d}$. As will be seen, in Fig. 11, alternate bit skipping occurs both in the lateral (line) and longitudinal or vertical (frame) directions when printing is effected. If a 4 X 4 matrix is to be employed there would be 16 values of threshold voltage produced and addresses would be generated not by alternate bit skipping but by skipping every third bit both in the lateral and longitudinal directions when printing is effected.

As will now be appreciated the invention provides for the production of a multicolour gradation picture by regulation of a threshold voltage and employment of write-in and read-out addresses for a picture memory, instead of, as in known comparable conventional arrangements, by use of an A/D converter and a ROM table. This has two very important practical advantages namely:-

1. Systems in accordance with the invention can be used in a practically satisfactory manner for highspeed video signals of 100 MHz or more, such as occur in recently developed colour graphic display devices, even although pulse signals are involved.

2. Since the threshold voltage used is regulated by external control, it can be applied to control nonuniformity in peak voltage among red, green and blue input video signals more easily and accurately than would otherwise be possible.

## Claims

1. A colour hard copy system for producing a colour hard picture from colour video signals characterised by the provision in combination of a front end circuit (4) to which the video signals are fed and in which they are converted into digital signals and sampled by a plurality of threshold values from a threshold voltage generating circuit - (10); a picture memory (8) in which picture information output digital signals produced by said front end circuit (4) are written in by prescribed write in addresses from a write-in address control circuit - (19), said write-in addresses being based on a selected method of representation of a multi-colour gradation picture; a read-out control circuit (33) for reading out picture data from the memory (8) based on said selected method of representation; and a coloured picture printer (28) for printing signals derived from the read out signals from the memory (8).

2. A system as claimed in claim 1 wherein said selected method of representation of a multi-colour picture is in accordance with a density pattern method.

3. A system as claimed in claim 2 with an organised dither method.

4. A system as claimed in any of the preceding claims and further characterised in that the video signals are red, green and blue (R, G, B) signals; the read out signals from the memory (8) are supplied to the printer (28) via an RGB/YMC - (yellow, magenta and cyan) conversion circuit (24); a read-out address generating circuit (30) counts clock signals from the printer (28) and supplies intermediate addresses to the read-out control circuit (33); sampling is effected by a sampling clock signal supplied by a sampling clock generating circuit (14) and supplying its output to the front end circuit (4) and to a write-in address generating circuit (16) feeding into the write-in address control circuit (19); and the circuits (10), (4), (14), (19), - (33) and (24) are controlled by a controller (36).

5. A method of producing a colour hard picture from colour video signals (R, G, B) characterised in that said signals are converted into sampled digital signals (RIN, GIN and BIN) by sampling by threshold voltages which are varied statically; said signals (RIN, GIN and BIN) are written into a picture memory (8) in accordance with a selected method of picture representation of a multi-colour gradation picture by write-in addresses corresponding to the threshold voltage values present at the time; reading out signals (ROUT, GOUT and BOUT) from the memory (8) by read-out addresses corresponding to the method of representation adopted; and utilising the read-out signals to operate a coloured picture printer (28).

6. A method as claimed in claim 5 wherein the output signals (ROUT, GOUT and BOUT) from the memory (8) are converted into yellow, magenta and cyan (YMC) signals before feeding into the printer.

7. A colour hard copy system characterised by having:

    a. video signals comprising R (red), G - (green) and B (blue);

    b. a picture memory storing picture information according to these video signals;

    c. a threshold control circuit sampling said video signals by a plurality of threshold values and converting the same into digital signals;

    d. a means of writing said digital signals in the picture memory by prescribed write-in addresses based on a method of representation of a multi-colour gradation picture; and

    e. a means of reading picture data out of the picture memory and printing the same based on the method of representation of a multi-colour gradation picture.

FIG.1

PICTURE MEMORY

PRINTING UNIT

CONTROLLER

0 219 989

# FIG. 2

VIDEO SIGNAL —37—▷38—

39

40

MSB    LSB

| | |
|---|---|
| 0000 | 41 |
| 0001 | |
| 0010 | |
| 0011 | |
| 0100 | |
| 0101 | |
| 0110 | |
| 0111 | |
| 1000 | |
| 1001 | |
| 1010 | |
| 1011 | |
| 1100 | |
| 1101 | |
| 1110 | |
| 1111 | |

42

0 219 989

# F I G. 3

VERTICAL

PICTURE CELL A

PICTURE CELL B

PICTURE CELL D

HORIZONTAL

PICTURE CELL C

# F I G. 5

| ADDRESS | DATA | |
|---------|------|---|
| 0 0 0 0 | 1 | THRESHOLD VOLTAGE a |
| 0 0 0 1 | 1 | |
| 0 0 1 0 | 1 | |
| 0 0 1 1 | 1 | |
| 0 1 0 0 | 0 | THRESHOLD VOLTAGE c |
| 0 1 0 1 | 1 | |
| 0 1 1 0 | 1 | |
| 0 1 1 1 | 0 | |
| 1 0 0 0 | 0 | THRESHOLD VOLTAGE d |
| 1 0 0 1 | 1 | |
| 1 0 1 0 | 0 | |
| 1 0 1 1 | 0 | |
| 1 1 0 0 | 0 | THRESHOLD VOLTAGE b |
| 1 1 0 1 | 1 | |
| 1 1 1 0 | 1 | |
| 1 1 1 1 | 1 | |

0 219 989

# F I G.4

VIDEO SIGNAL 1

- - - - - - - - - - - - - - THRESHOLD VOLTAGE d
- - - - - - - - - - - - - - THRESHOLD VOLTAGE c
- - - - - - - - - - - - - - THRESHOLD VOLTAGE b
- - - - - - - - - - - - - - THRESHOLD VOLTAGE a

PICTURE CELL    A B   C D    A B   C D    A B   C D    A B   C D

THRESHOLD VOLTAGE 39    a a   a a    b b   b b    c c   c c    d d   d d

WRITE IN ADDRESS

0 219 989

# F I G.6

● : PRINTED DOT

○ : NON-PRINTED DOT

0 219 989

# F I G. 7

VIDEO SIGNAL 1

PICTURE CELL    A B   C D    A B   C D    A B   C D    A B   C D

THRESHOLD VOLTAGE d
THRESHOLD VOLTAGE c
THRESHOLD VOLTAGE b
THRESHOLD VOLTAGE a

THRESHOLD VOLTAGE 3    a        b    c      d

WRITE-IN ADDRESS

| MSB ··· LSB | | | |
|---|---|---|---|
| 0 0 0 0 | 0 0 1 0 | 0 0 0 1 | 0 0 1 1 |

0 219 989

## FIG. 8

| ADDRESS | DATA |
|---------|------|
| 0 0 0 0 | 1 |
| 0 0 0 1 | 1 |
| 0 0 1 0 | 1 |
| 0 0 1 1 | 1 |

## FIG. 10

| I | III | I | III | I | III |
|---|-----|---|-----|---|-----|
| IV | II | IV | II | IV | II |
| I | III | I | III | I | III |
| IV | II | IV | II | IV | II |
| I | III | I | III | I | |
| IV | II | IV | II | IV | |
| | | | | | |

## FIG. 9

| 1 | 3 |
|---|---|
| 4 | 2 |

0 219 989

# FIG.11

○ : WRITTEN WITH THRESHOLD VOLTAGE a

△ : WRITTEN WITH THRESHOLD VOLTAGE b

✕ : WRITTEN WITH THRESHOLD VOLTAGE c

□ : WRITTEN WITH THRESHOLD VOLTAGE d

0 219 989